# EUROPÄISCHE PATENTSCHRIFT

(11) **EP 1 069 169 B1**
(45) Veröffentlichungstag und Bekanntmachung des Hinweises auf die Patenterteilung: **20.10.2004**
(21) Anmeldenummer: 00111941.1
(22) Anmeldetag: 15.06.2000
(51) Int. Cl.: C09J 4/00, C08F 218/08, C08F 218/10, C08F 210/02, C09J 131/02

(54) **Emissionsarme Klebemittel auf Basis einer wässrigen, schutzkolloidfreien Polymerdispersion von Vinylacetat-Ethylen-Mischpolymerisaten**
Low emission adhesives based on an aqueous polymer dispersion, not containing any protective colloid, of vinylacetate-ethylene copolymers
Adhésifs à basse émission basés sur une dispersion aqueuse de polymère, sans colloide protectif, de copolymères de vinylacétate-éthylène

(30) Priorität: 08.07.1999 DE 19931827
(43) Veröffentlichungstag der Anmeldung: 17.01.2001
(73) Patentinhaber: Wacker-Chemie GmbH, 81737 München (DE)
(72) Erfinder: Künstle, Holger, Dr., 84489 Burghausen (DE); Weissgerber, Rudolf, Dr., 84489 Burghausen (DE)
(74) Vertreter: Schuderer, Michael, Dr.

(56) Entgegenhaltungen:
- EP-A- 0 295 727
- EP-A- 0 841 351

## Beschreibung

Die Erfindung betrifft emissionsarme Klebemittel auf Basis einer wässrigen, schutzkolloidfreien Polymerdispersion oder daraus erhältlichen, in Wasser redispergierbaren Dispersionspulvern von Vinylacetat-Ethylen-Mischpolymerisaten.

Es ist bekannt, Dispersionen auf Basis von Acrylatpolymerisaten als Haftkleber und Fußbodenkleber einzusetzen. Diese Dispersionen eignen sich für Anwendungen als Haft- und Fußbodenkleber, da aufgrund der niedrigen Glasübergangstemperatur der Acrylatpolymere, üblicherweise auf Basis von Butylacrylat bzw. 2-Ethylhexylacrylat die erforderliche Oberflächenklebrigkeit erreicht wird. Aus der EP-A 17986 (US-A 4322516) sind Vinylacetat-Ethylen-Mischpolymerisate mit einem hohen Anteil an Acrylsäureester bekannt, welche auch ohne den Zusatz klebrigmachender Harze gute Oberflächenklebrigkeit zeigen. Die EP-A 185356 (US-A 4831077) und die EP-A 216210 (US-A 4997879) betreffen Vinylacetat-Ethylen-Mischpolymerisate mit Acrylatanteil, welche aufgrund der Copolymerisation von hydroxyfunktionellen Comonomeren auch bei erhöhter Temperatur noch ausgezeichnete Adhäsion aufweisen.

Acrylathaltige Dispersionen setzen allerdings auf alkalischem Untergrund bei pH > 9.0 durch Verseifung der Estergruppe die entsprechenden Alkohole frei. So wird aus Butylacrylat Butanol und aus 2-Ethylhexylacrylat 2-Ethylhexanol freigesetzt, die an die Umgebungsluft abgegeben werden können. Da dieser Prozeß der Verseifung nicht zu stoppen ist, werden über Wochen, Monate und Jahre aus der applizierten Dispersion diese Alkohole an die Umwelt abgegeben.

Aufgabe der Erfindung war es daher, eine Klebemittel-Dispersion zu entwickeln, bei der diese Emissionsproblematik nicht auftritt, die aber bezüglich Oberflächenklebrigkeit, Adhäsion und Klebrigkeit ein mit Acrylat-haltigen Dispersionen vergleichbares Eigenschaftsprofil aufweist.

Gelöst wurde die Aufgabe, indem der Acrylat-Anteil im Copolymer durch verzweigte Vinylester-Einheiten ersetzt wird.

Aus der EP-A 699692 (US-A 5665816) war bekannt, zur Verbesserung der Adhäsion auf unbehandelten Polyolefinuntergründen Klebemitteldispersionen einzusetzen, welche Celluloseether aufgepfropft auf Vinylacetat-Ethylen-Mischpolymerisate enthalten, wobei die Vinylacetat-Ethylen-Mischpolymerisate noch Acrylat-Anteile und Anteile von verzweigten Vinylestern aufweisen. In der EP-A 841351 wird empfohlen, zur Verbesserung der Adhäsion von Haftklebern auf Polyacrylatbasis auf unpolaren O-berflächen, die Acrylate mit Vinylestern von Neo-Säuren zu copolymerisieren. Die US-A 5371137 beschreibt die Verwendung von mit langkettigen Vinylestern modifizierten Vinylacetat-Ethylen-Copolymerisaten zur Verbesserung der Haftung an unpolaren Oberflächen.

Die EP-A 295727 betrifft Latices auf der Basis von Terpolymeren aus Vinylacetat, Ethylen und einem Vinylester von tertiären aliphatischen Carbonsäuren mit 9 C-Atomen, insbesondere VeoVa 9 (Tg = 60°C). Diese Terpolymere wurden für Latices in Coatinganwendungen entwickelt, welche in dieser Anwendung zu hohen Tack zeigen und geringe Alkalibeständigkeit aufweisen. Klebemittel auf der Basis von Vinylester-Ethylen-Mischpolymerisaten mit den 4 essentiellen Polymerkomponenten a) Ethylen, b) Vinylester von Carbonsäuren mit 1 bis 9 C-Atomen, c) Vinylester von verzweigten Monocarbonsäuren mit 8 bis 13 C-Atomen mit einer Tg von deren Homopolymerisaten von < 0°, sowie d) ethylenisch ungesättigte Mono- oder Dicarbonsäure sind aus dieser Schrift nicht bekannt

Gegenstand der Erfindung ist die Verwendung von wässrigen, schutzkolloidfreien Polymerdispersionen oder daraus erhältlichen, in Wasser redispergierbaren Dispersionspulvern von Vinylester-Ethylen-Mischpolymerisaten, als emissionsarme Klebemittel, dadurch gekennzeichnet, daß diese erhalten werden durch radikalisch initiierte Emulsionspolymerisation, in wässrigem Medium und in Gegenwart von einem oder mehreren Emulgatoren, eines Comonomergemisches aus
a) 5 bis 50 Gew.-% Ethylen,
b) 20 bis 80 Gew.-% eines oder mehrerer Vinylester aus der Gruppe der Vinylester von unverzweigten oder verzweigten Carbonsäuren mit 1 bis 9 C-Atomen, deren Homopolymerisate eine Glasübergangstemperatur Tg > 0°C aufweisen,
c) 5 bis 70 Gew.-% eines oder mehrerer Vinylester aus der Gruppe der Vinylester von verzweigten Carbonsäuren mit 8 bis 13 C-Atomen, deren Homopolymerisate eine Glasübergangstemperatur Tg < 0°C aufweisen,
d) 0.5 bis 10 Gew.-% eine oder mehrere ethylenisch ungesättigte Mono- oder Dicarbonsäuren mit 3 bis 4 C-Atomen,
e) 0 bis 10 Gew.-% ein oder mehrere ethylenisch ungesättigte, hydroxyalkylfunktionelle Comonomere,
f) 0 bis 10 Gew.-% weitere einfach oder mehrfach ethylenisch ungesättigte Comonomere,
wobei die Angaben in Gew.-% jeweils auf das Gesamtgewicht der Comonomere bezogen sind und sich auf 100 Gew.-% aufaddieren, und die damit erhaltene Dispersion gegebenenfalls getrocknet wird.

Vorzugsweise werden 10 bis 40 Gew.-% Ethylen copolymerisiert.

Geeignete Vinylester b) aus der Gruppe der Vinylester von unverzweigten oder verzweigten Carbonsäuren mit 1 bis 9 C-Atomen, deren Homopolymerisate eine Glasübergangstemperatur Tg > 0°C aufweisen, sind Vinylacetat, Vinylpropionat, Vinylbutyrat, 1-Methylvinylacetat, Vinylpivalat und Vinylester von α-verzweigten Monocarbonsäuren mit 9 C-Atomen (VeoVa9®, Handelsname der Firma Shell). Bevorzugt werden Vinylacetat, Vinylpropionat und VeoVa9®. Besonders bevorzugt wird Vinylacetat. Am meisten bevorzugt werden 45 bis 70 Gew.-% Vinylester b) copolymerisiert.

Geeignete Vinylester c) aus der Gruppe der Vinylester von verzweigten Carbonsäuren mit 8 bis 12 C-Atomen, deren Homopolymerisate eine Glasübergangstemperatur Tg < 0°C aufweisen, sind Vinyl-2-Ethylhexanoat, Vinyllaurat, Vinylester von α-verzweigten Monocarbonsäuren mit 10 oder 11 C-Atomen (VeoVa10®, VeoVa11®, Handelsname der Firma Shell) und Vinylester von verzweigten Monocarbonsäuren mit 10 bis 13 C-Atomen (Exxar Neo12). Bevorzugt werden die Vinylester von α-verzweigten Monocarbonsäuren mit 10 oder 11 C-Atomen (VeoVa10®, VeoVa11®). Am meisten bevorzugt werden 10 bis 45 Gew.-% Vinylester c) copolymerisiert.

Geeignete ethylenisch ungesättigte Mono- und Dicarbonsäuren d) sind Acrylsäure, Methacrylsäure, Itaconsäure, Fumarsäure und Maleinsäure, wobei Acrylsäure, Methacrylsäure, Itaconsäure bevorzugt werden. Besonders bevorzugt werden Acrylsäure und Methacrylsäure. Am meisten bevorzugt werden 2 bis 6 Gew.-% Comonomere d) copolymerisiert.

Geeignete ethylenisch ungesättigte, hydroxyalkylfunktionelle Comonomere e) sind Methacrylsäure- und Acrylsäurehydroxyalkylester mit C₁- bis C₅-Alkylrest wie Hydroxyethyl-, Hydroxypropyl- oder Hydroxybutylacrylat oder -methacrylat; vorzugsweise Hydroxyethylacrylat, Hydroxyethylmethacrylat, Hydroxypropylacrylat. Am meisten bevorzugt werden 0 bis 5 Gew.-% Comonomere e) copolymerisiert.

Beispiele für einfach oder mehrfach ethylenisch ungesättigte Comonomere f) sind funktionelle Comonomere wie ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise N-Methylolacrylamid (NMA), N-Methylolmethacrylamid, Alkylether wie der Isobutoxyether oder Ester des N-Methylolacrylamids. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane.

Die bevorzugten Hilfsmonomere f) sind ethylenisch ungesättigte Carbonsäureamide wie Acrylamid und Methacrylamid, ethylenisch ungesättigte Sulfonsäuren bzw. deren Salze, wie Vinylsulfonsäure sowie Vinylpyrrolidon. Besonders bevorzugt wird Acrylamid. Am meisten bevorzugt werden 0 bis 2 Gew.-% Comonomere f) copolymerisiert.

Die Angaben in Gewichtsprozent addieren sich in den Copolymerisaten jeweils auf 100 Gew.-% auf. Im allgemeinen erfolgt die Monomerauswahl bzw. die Auswahl der Gewichtsanteile der Comonomere so, daß eine Glasübergangstemperatur Tg von kleiner als 0°C, vorzugsweise -60°C bis -10°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Besonders bevorzugte Copolymere bestehen aus den folgenden Comonomereinheiten:
10 bis 40 Gew.-% Ethylen, b) 35 bis 70 Gew.-% Vinylacetat, c) 10 bis 45 Gew.-% VeoVa10^{R} und/oder VeoVa11^{R}, d) 2 bis 6 Gew.-% Acrylsäure und/oder Methacrylsäure, e) 0 bis 5 Gew.-% Hydroxyethylacrylat und f) 0 bis 2 Gew.-% Acrylamid.

Die Herstellung nach dem Emulsionspolymerisationsverfahren, erfolgt bei 30°C bis 90°C, vorzugsweise 45°C bis 70°C, und bei einem Druck von 30 bis 100 bar abs., vorzugsweise 40 bis 80 bar abs. . Die Polymerisation kann im Batchverfahren, wobei alle Komponenten im Reaktor vorgelegt werden, und im Dosierverfahren, wobei einzelne oder mehrere Komponenten während der Polymerisation zugeführt werden, durchgeführt werden. Die Dosierungen können separat (räumlich und zeitlich) durchgeführt werden oder die zu dosierenden Komponenten können alle oder teilweise voremulgiert dosiert werden. Bevorzugt wird das Batchverfahren bei dem die Comonomerkomponenten a), b) und c) vorgelegt werden und Initiatoren, Emulgatoren sowie gegebenenfalls weitere Comonomere d), e) und f) zudosiert werden.

Die Initiierung der Polymerisation erfolgt mit den für die Emulsionspolymerisation gebräuchlichen Initiatoren oder Redox-Initiator-Kombinationen, beispielsweise Hydroperoxide wie tert.-Butylhydroperoxid, tert.-Butylperoxopivalat, Cumolhydroperoxid, Isopropylbenzolmonohydroperoxid, Azoverbindungen wie Azobisisobutyronitril, anorganische Initiatoren wie die Natrium-, Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate wie Natriumhydroxymethansulfinat (Rongalith), und Ascorbinsäure bzw. Isoascorbinsäure. Die Reduktionsmittelmenge beträgt vorzugsweise 0.01 bis 5.0 Gew.-%, bezogen auf das Gesamtgewicht der Monomere.

Bevorzugt werden Redoxkatalysatorkombinationen mit Natrium-, Kalium- oder Ammoniumsalzen der Peroxodischwefelsäure als Oxidationskomponente und Ascorbinsäure oder Isoascorbinsäure als Reduktionsmittel.

Die Stabilisierung des Polymerisationsansatzes erfolgt mittels Emulgatoren, unter Ausschluß von Schutzkolloiden. Die Gesamtmenge an Emulgator beträgt vorzugsweise 0.1 bis 5 Gew.-%, insbesonders 0.5 bis 3 Gew.-%, bezogen auf das Gesamtgewicht der Comonomeren. Geeignete Emulgatoren sind anionische oder nichtionische Emulgatoren oder deren Gemische, beispielweise:
1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester und deren Alkali- und Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl- bzw. Alkylarylrest und 1 bis 50 EO-Einheiten.
4) Alkylpolyglykolether bevorzugt mit 8 bis 40 EO-Einheiten und Alkylresten mit 8 bis 20 C-Atomen.
5) Alkylarylpolyglykolether bevorzugt mit 8 bis 40 EO-Einheiten und 8 bis 20 C-Atomen in den Alkyl- und Arylresten.
6) Ethylenoxid/Propylenoxid (EO/PO)-Blockcopolymere bevorzugt mit 8 bis 40 EO- bzw. PO-Einheiten.

Bevorzugt werden Alkyl- und Alkylarylethersulfate mit 8 bis 18 C-Atomen im hydrophoben Rest und 1 bis 50 Ethylenoxideinheiten, wie sulfatierte Nonylphenolethoxylate und sulfatierte Isotridecylethoxylate.

Zur Molekulargewichtseinstellung können bei der Polymerisation die üblicherweise verwendeten Regler, zum Beispiel n-Dodecylmercaptan, t-Dodecylmercaptan, Mercaptopropionsäure, Mercaptopropionsäuremethylester, Isopropanol und Acetaldehyd, vorzugsweise in Mengen von 0.1 bis 3.0 Gew.%, bezogen auf das Gesamtgewicht der Monomeren, zugesetzt werden.

Die mit dem erfindungsgemäßen Verfahren erhältlichen wässrigen Dispersionen haben einen Feststoffgehalt von 30 bis 75 Gew.-%, vorzugsweise von 40 bis 65 Gew.-%. Zur Herstellung der in Wasser redispergierbaren Dispersionspulver werden die wässrigen Dispersionen in bekannter Weise getrocknet, beispielsweise mittels Wirbelschichttrocknung, Gefriertrocknung und vorzugsweise Sprühtrocknung.

Die Klebemittel eignen sich vor allem für Anwendungen als Haftkleber und als Bodenwand-, Wand- und Deckenklebstoff. Bevorzugter Anwendungsbereich ist der als Bodenklebstoff zur Verklebung von elastischen und textilen Belägen. Besonders bevorzugt wird die Anwendung als emissionsarmer Fußbodenkleber. Geeignete Rezepturen für Fußbodenkleber enthalten im allgemeinen 15 bis 50 Gew.-% Dispersion, 5 bis 35 Gew.-% klebrigmachendes Harz, 15 bis 50 Gew.-% Füllstoff, wobei sich die Anteile in Gew.-% jeweils auf 100 Gew.-% aufaddieren. Für Wandund Deckenklebstoffe kann diese Rezeptur auch in Kombination mit natürlichen Verdickungsmitteln wie Cellulose und Stärke oder mit synthetischen Verdickungsmittel eingesetzt werden. In diesen beiden Anwendungsbereichen erfolgt der Einsatz der genannten Rezeptur häufig auch ohne Zusatz von klebrigmachenden Harzen. Typische Rezepturen für Haftkleber basieren häufig nur auf der Klebstoffdispersion. Gegebenenfalls können klebrigmachende Harze oder Verarbeitungshilfsmittel zugegeben werden.

Vorteilhaft an den beanspruchten Systemen ist, daß keine Alkohole wie Butanol oder 2-Ethylhexanol durch Verseifung aus der Dispersion auf alkalischen Untergründen freigesetzt werden können und gleichzeitig die anwendungstechnischen Eigenschaften, insbesondere hohe Oberflächenklebrigkeit (Tack), hohe Adhäsion (Schälfestigkeit) und hohe Kohäsion (Scherstandfestigkeit), der acrylathaltigen Dispersionen erreicht werden. Demgegenüber zeigen Vac/E-Systeme mit vergleichbarer Tg nur geringe Kohäsion, Adhäsion und Tack und schlechte Verstreichbarkeit in Fußbodenkleberrezepturen.

Die nachfolgenden Beispiele dienen der weiteren Erläuterung der Erfindung:

### Beispiel 1:

In einem 21-Rührautoklaven wurden 395 g demineralisiertes Wasser, 5 g eines C₁₅-Alkylsulfonats, 15 g eines ethoxylierten Isotridecylalkohols mit 25 EO-Einheiten, 8 g Acrylsäure, 117 g VeoVa11^{R} und 643 g Vinylacetat eingewogen. Der pH-Wert wurde mit Natronlauge auf pH = 3.5 eingestellt. Es wurde auf 50°C aufgeheizt und bis 50 bar Ethylen aufgedrückt.
Die Polymerisation wurde gestartet und aufrechterhalten durch gleichzeitige Dosierung von jeweils 10 ml/h Natriumpersulfat (10 %-ige wässrige Lösung) und 10 ml/h Ascorbinsäure (5 %-ige wässrige Lösung). Nach dem Start erfolgte die kontinuierliche Dosierung von 25 g Acrylsäure und 67 g eines ethoxylierten Isotridecylalkohols mit 25 EO-Einheiten über einen Zeitraum von 4 Stunden. Der pH-Wert wurde während der Polymerisation konstant zwischen 3.7 und 4.7 gehalten. 30 Minuten nach Reaktionsbeginn wurde Ethylen auf 70 bar nachgedrückt und bis Dosierende der Emulgatorlösung der Ethylendruck gehalten. Nach Ende der Emulgatordosierung wurden die Initiatordosierungen bis Reaktionsende beibehalten.
Nach Abkühlen und Entspannen resultierte eine stabile Dispersion mit 62.5 % Feststoffgehalt und einer Brookfield-Viskosität von 6400 mPas bei 20 Upm und einem pH-Wert von 4.6. Der Ethylengehalt der Dispersion betrug 22 Gew.-%.

### Beispiel 2:

Es wurde wie in Beispiel 1 vorgegangen. Es wurden aber 205 g VeoVa11^{R} und 555 g Vinylacetat eingesetzt.
Nach Abkühlen und Entspannen resultierte eine stabile Dispersion mit 61.2 % Feststoffgehalt und einer Brookfield-Viskosität von 4600 mPas bei 20 Upm und einem pH-Wert von 4.6.

### Beispiel 3:

Es wurde wie in Beispiel 1 verfahren. Es wurden aber 263 g VeoVa11^{R} und 497 g Vinylacetat eingesetzt.
Nach Abkühlen und Entspannen resultierte eine stabile Dispersion mit 60.9 % Feststoffgehalt und einer Brookfield-Viskosität von 5200 mPas bei 20 Upm und einem pH-Wert von 4.4.

### Beispiel 4:

Es wurde wie in Beispiel 2 verfahren, aber jeweils 15 ml/h Natriumpersulfat (10 %-ige wässrige Lösung) und 15 ml/h Ascorbinsäure (5 %-ige wässrige Lösung) dosiert. Zusätzlich wurden 0.4 g Dodecylmercaptan in der Acrylsäure-haltigen Emulgatordosierung zugefügt.
Nach Abkühlen und Entspannen resultierte eine stabile Dispersion mit 59.7 % Feststoffgehalt und einer Brookfield Viskosität von 2600 mPas bei 20 Upm und einem pH-Wert von 4.5

### Beispiel 5:

Es wurde wie in Beispiel 2 verfahren. Es wurden aber nur 30.75 g VeoVa11^{R} und 82.25 g Vinylacetat vorgelegt und Ethylen auf 52 bar aufgedrückt. Die restlichen Mengen von 174.25 g VeoVa11^{R} und 471.75 g Vinylacetat wurden über einen Zeitraum von 5 Stunden kontinuierlich dosiert.
Nach Abkühlen und Entspannen resultierte eine stabile Dispersion mit 59.5 % Feststoffgehalt und einer Brookfield-Viskosität von 8400 mPas bei 20 Upm und einem pH-Wert von 4.7.

### Beispiel 6:

Es wurde wie in Beispiel 5 verfahren, aber zusätzlich 15 g Acrylamid in die Vorlage gegeben. Nach Abkühlen und Entspannen resultierte eine stabile Dispersion mit 58.8 % Feststoffgehalt und einer Brookfield-Viskosität von 9700 mPas bei 20 Upm und einem pH-Wert von 4.6.

### Beispiel 7:

Es wurde wie in Beispiel 5 verfahren, aber zusätzlich 15 g Hydroxyethylacrylat dosiert. Nach Abkühlen und Entspannen resultierte eine stabile Dispersion mit 60.5 % Feststoffgehalt und einer Brookfield-Viskosität von 6400 mPas bei 20 Upm und einem pH-Wert von 4.6.

### Beispiel 8:

Es wurde wie in Beispiel 1 verfahren, aber anstelle 117 g Veo-Va11^{R} die gleiche Menge VeoVa10^{R} eingesetzt. Nach Abkühlen und Entspannen resultierte eine stabile Dispersion mit 61.6 % Feststoffgehalt und einer Brookfield-Viskosität von 4900 mPas bei 20 Upm und einem pH-Wert von 4.6.

### Beispiel 9:

Es wurde wie in Beispiel 2 verfahren, aber anstelle 205 g Veo-Va11^{R} die gleiche Menge VeoVa10^{R} eingesetzt. Nach Abkühlen und Entspannen resultierte eine stabile Dispersion mit 60.7 % Feststoffgehalt und einer Brookfield-Viskosität von 4000 mPas bei 20 Upm und einem pH-Wert von 4.7.

### Beispiel 10:

Es wurde wie in Beispiel 3 verfahren, aber anstelle 263 g Veo-Va11^{R} die gleiche Menge VeoVa10^{R} eingesetzt. Nach Abkühlen und Entspannen resultierte eine stabile Dispersion mit 61.0 % Feststoffgehalt und einer Brookfield-Viskosität von 6100 mPas bei 20 Upm und einem pH-Wert von 4.6.

### Vergleichsbeispiel 11:

Es wurde wie in Beispiel 3 verfahren, aber als VinylesterMonomer nur 760 g Vinylacetat und kein VeoVa-Monomer copolymerisiert. Nach Abkühlen und Entspannen resultierte eine stabile Dispersion mit 62.3 % Feststoffgehalt und einer Brookfield-Viskosität von 3800 mPas bei 20 Upm und einem pH-Wert von 4.5.

### Vergleichsbeispiel 12:

Es wurde wie in V.bsp. 11 verfahren, aber 150 g Vinylacetat vorgelegt. Die Polymerisation wurde bei 60°C und 58 bar aufgedrücktem Ethylen gestartet. Als Initiatoren wurden 4.5 ml/h t-Butylhydroperoxid (10 %-ig) und 10 ml/h Ascorbinsäure (5 %-ig) verwendet. 610 g Vinylacetat wurden dann über einen Zeitraum von 6 h dosiert. Ethylen wurde auf 75 bar nachgedrückt und bis 2 Stunden nach Ende der Vinylacetat-Dosierung gehalten. Nach Abkühlen und Entspannen resultierte eine stabile Dispersion mit 61.4 % Feststoffgehalt und einer Brookfield-Viskosität von 8400 mPas bei 20 Upm und einem pH-Wert von 4.7.

### Vergleichsbeispiel 13:

Es wurde wie in Beispiel 1 verfahren, aber 673 g Vinylacetat mit 99 g 2-Ethylhexylacrylat anstelle des VeoVa-Comonomeren copolymerisiert. Nach Abkühlen und Entspannen resultierte eine stabile Dispersion mit 61.2 % Feststoffgehalt und einer Brookfield-Viskosität von 3400 mPas bei 20 Upm und einem pH-Wert von 4.7.

### Vergleichsbeispiel 14:

Es wurde wie in Beispiel 1 verfahren, aber 569 g Vinylacetat mit 195 g 2-Ethylhexylacrylat anstelle des VeoVa-Comonomeren copolymerisiert. Nach Abkühlen und Entspannen resultierte eine stabile Dispersion mit 60.3 % Feststoffgehalt und einer Brookfield-Viskosität von 3500 mPas bei 20 Upm und einem pH-Wert von 4.6.

### Vergleichsbeispiel 15:

Es wurde wie in Beispiel 1 verfahren, aber 335 g Vinylacetat mit 460 g 2-Ethylhexylacrylat anstelle des VeoVa-Comonomeren copolymerisiert. Nach Abkühlen und Entspannen resultierte eine stabile Dispersion mit 61.2 % Feststoffgehalt und einer Brookfield-Viskosität von 3400 mPas bei 20 Upm und einem pH-Wert von 4.7.

### Die Klebemitteleigenschaften wurden mit folgende Bestimmungsmethoden ermittelt:

Die zu prüfenden Klebstoffdispersionen wurden für alle Messungen mit einem Rakel in einer solchen Dicke auf die Trägerfolien aufgezogen, daß nach dem Trocknen einen gleichmäßige Polymerisatschicht von 24 bis 26 g/m³ zurückblieb.
Die Ergebnisse der Messungen sind in Tabelle 1 zusammengefaßt.

### Oberflächenklebrigkeit (Tack):

Ein 20 cm langer und 2.5 cm breiter Klebestreifen (Trägermaterial: polymerweichmacherhaltiges PVC, 0.1 mm dick) wurde in Form einer Schlaufe senkrecht hängend mit der Klebstoffschicht nach außen in den oberen Backen einer Zugprüfmaschine eingespannt. Anschließend wurde die "Schlaufe" durch Zusammenfahren der beiden Backen der Zugprüfmaschine senkrecht mit einer Geschwindigkeit von 100 mm/Minute auf eine waagrecht befestigte, sorgfältig gereinigte Glasplatte ohne Druckanwendung in einer Länge von etwa 3 cm aufgelegt. Danach erfolgte sofort mit gleicher Geschwindigkeit der Abzug des Klebestreifens von der Oberfläche. Die höchste für das Abziehen der Schlaufe benötigte Kraft wird als Maß für die Oberflächenklebrigkeit hergenommen. Der angegebene Wert in N/2.5cm ist der Mittelwert aus fünf Einzelmessungen, wobei jedes Mal ein frischer Klebestreifen und eine frische Glasoberfläche verwendet wurden.

### Adhäsion (Schälfestigkeit SF):

Ein 20 cm langer und 2.5 cm breiter Klebestreifen wurde von einem Ende ausgehend in einer Länge von ca. 12 cm auf eine sorgfältig gereinigte Kristallglasoberfläche blasenfrei aufgelegt. Durch 5-maliges Walzen (hin und her) mit einer 2.2 kg schweren, mit Silicongummi überzogenen Stahlwalze wurde der Klebestreifen angedrückt. Nach 8-minütiger bzw. 24-stündiger Lagerung im Klimaraum bei 23°C und 50 % relativer Luftfeuchtigkeit wurde der Klebestreifen mit einer Geschwindigkeit von 300 mm/Minute im 180° Winkel über eine Länge von 5 cm abgezogen. Die dazu benötigte durchschnittliche Kraft wurde gemessen. Die angegebenen Werte in N/2.5cm sind Mittelwerte aus jeweils 5 Einzelmessungen.

### Kohäsion (Scherstandfestigkeit SSF):

Ein 5 cm langer und 2.5 cm breiter Klebestreifen wurde mit einer Fläche von 2.5 cm x 2.5 cm so auf eine sorgfältig gereinigte Glasplatte blasenfrei aufgelegt, daß das restliche Stück Klebestreifen über den Rand der Glasplatte hinausragte. Der Streifen wurde durch das Anwalzen (5-mal hin und her) mit einer mit Silicongummi überzogenen, 2.2 kg schweren Stahlwalze aufgedrückt. Nach einer Verklebungszeit von 8 Minuten wurde eine Glasplatte so in einem Winkel von 2° zur Senkrechten (um Schälkräfte sicher auszuschließen) in einer Halterung befestigt, daß das freie Ende des Klebestreifens nach unten hing. An diesem Ende wurde ein Gewicht von 2 kg frei hängend befestigt. Es wurde die Zeit bestimmt, bis sich das freie Ende des Klebestreifens unter dem Zug des Gewichtes von der Glasplatte löste. Die Messung wurde in einem Klimaraum bei 23°C und 50 % relativer Luftfeuchtigkeit durchgeführt. Die angegebenen Werte in Minuten sind Mittelwerte aus jeweils 3 Einzelmessungen.

Die Emission der Klebemittel wurde in einer Formulierung für Fußbodenkleber bestimmt:

| Fußbodenkleberformulierung : | |
|---|---|
| Klebemitteldispersion | 32.0 Gew.-% |
| Kollophoniumharz-Mischung | 20.0 Gew.-% |
| Füllstoff (Omyacarb 6, Omya GmbH) | 10.0 Gew.-% |
| Füllstoff (Omyacarb 20,Omya GmbH) | 26.0 Gew.-% |
| Emulgator (Witcolate B 320) | 0.5 Gew.-% |
| Verdicker (Latecoll D, 4 %-ig) | 8.5 Gew.-% |
| Wasser | 3.0 Gew.-% |

Als Klebemitteldispersion wurde die Vac/E/VeoVa11-Dispersion aus Beispiel 3 eingesetzt und als Vergleich dazu die Vac/E/EHA-Dispersion aus Vergleichsbeispiel 15.
Die flüchtigen organischen Verbindungen der Formulierung wurden entsprechend der GEV-Prüfmethode (GEV = Gemeinschaft Emissionskontrollierter Verlegewerkstoffe e.V.) bestimmt. Mit der GEV-Prüfmethode wird das Emissionsverhalten von Verlegewerkstoffen nach definierter Lagerung in einer Prüfkammer ermittelt: Erfaßt werden Stoffe, die als krebserzeugend oder krebsverdächtig angesehen werden (K1, K2 oder K3 gemäß Gefahrstofffverordnung/TRGS 905) und polare und unpolare Stoffe, die nach definierter Lagerung verdampfen und danach gasförmig vorliegen (TVOC).
Die Emissionen welche aus der Kollophoniumharz-Mischung stammen, wie Longicyclen und Terpene, wurden nicht berücksichtigt.

### Testung der Formulierung mit Dispersion aus Beispiel 3:

Nach einem Tag Lagerung wurden keine K-Stoffe (Acrylamid, Acrylnitril, Benzol, 1,4 Dioxan, Vinylacetat, Acetaldehyd und Formaldehyd) in der Prüfkammer detektiert.
Nach 10 Tagen Lagerung wurden nur 77 ppm Essigsäure detektiert.

### Testung der Formulierung mit Dispersion aus Vergleichsbeispiel 15:

Nach einem Tag Lagerung wurden keine K-Stoffe (Acrylamid, Acrylnitril, Benzol, 1,4 Dioxan, Vinylacetat, Acetaldehyd und Formaldehyd) in der Prüfkammer detektiert.
Nach 10 Tagen Lagerung wurden 76 ppm Essigsäure und 230 ppm

### 2- Ethylhexanol detektiert.

**Tabelle 1**

| Klebemitteleigenschaften der Dispersionen | | | | | | |
|---|---|---|---|---|---|---|
| Beispiel | Polymer | Tg (°C) | Tack (N/2.5cm) | SSF (min) | SF (N/2.5cm) | WSF (min/cm) |
| 1 | Vac/VeoVa11/E | -14.3 | 2.0 | > 3000 | 9.4 | 180 |
| 2 | Vac/VeoVa11/E | -19.4 | 2.7 | > 3000 | 12.7 | 340 |
| 3 | Vac/VeoVa11/E | -24.4 | 3.6 | > 3000 | 14.7 | 150 |
| 4 | Vac/VeoVa11/E | -24.5 | 9.5 | 230 | 17.9 | 250 |
| 5 | Vac/VeoVa11/E | -21.2 | 5.7 | 600 | 16.0 | 195 |
| 6 | Vac/VeoVa11/E | -20.2 | 3.9 | > 3000 | 12.5 | 150 |
| 7 | Vac/VeoVa11/E | -23.8 | 2.9 | > 3000 | 11.7 | > 10000 |
| 8 | Vac/VeoVa10/E | -9.6 | 2.1 | > 3000 | 8.3 | 180 |
| 9 | Vac/VeoVa10/E | -12.3 | 2.4 | > 3000 | 11.2 | 100 |
| 10 | Vac/VeoVa10/E | -14.1 | 2.8 | > 3000 | 12.2 | 240 |
| V 11 | Vac/E | -7.5 | 1.0 | 150 | 6.5 | 150 |
| V 12 | Vac/E | -25 | 2.0 | 160 | 8.0 | 180 |
| V 13 | Vac/E/EHA | -14.1 | 4.2 | > 3000 | 7.5 | 170 |
| V 14 | Vac/E/EHA | -23.1 | 7.2 | > 3000 | 9.0 | 340 |
| V 15 | Vac/E/EHA | -35.0 | 10.0 | > 3000 | 15.5 | 450 |

### Diskussion der Ergebnisse aus Tabelle 1:

Mit zunehmendem Einbau von VeoVa11 oder VeoVa10 nimmt die Tg ab und damit die Oberflächenklebrigkeit (Tack) und die Adhäsion (Schälfestigkeit SF) zu (Beispiele 1 bis 3, 8 bis 10). Die Oberflächenklebrigkeiten, Adhäsion und Kohäsion (Scherstandfestigkeit SSF) sind mit VeoVa11 bzw. VeoVa 10 deutlich besser (Beispiel 3) als im reinen VAc/E-System (Vergleichsbeispiel 12). Durch eine Verringerung des Molekulargewichts bekommt man Polymere mit reduzierter Kohäsion und dafür besserer Oberflächenklebrigkeit und Adhäsion (Beispiel 4).
Wie der Vergleich von Beispiel 4 mit Vergleichsbeispiel 14 zeigt, können mit VAC/VeoVa/E-Copolymeren bessere Oberflächenklebrigkeit und Schälfestigkeit im Vergleich zum Vac/E/Acrylat-System bei vergleichbarer Tg und Kohäsion erreicht werden.

## Patentansprüche

1. Verwendung von wässrigen, schutzkolloidfreien Polymerdispersionen oder daraus erhältlichen, in Wasser redispergierbaren Dispersionspulvern von Vinylester- Ethylen-Mischpolymerisaten als emissionsarme Klebemittel, **dadurch gekennzeichnet, daß** diese erhalten werden durch radikalisch initiierte Emulsionspolymerisation, in wässrigem Medium und in Gegenwart von einem oder mehreren Emulgatoren, eines Comonomergemisches aus
a) 5 bis 50 Gew.-% Ethylen,
b) 20 bis 80 Gew.-% eines oder mehrerer Vinylester aus der Gruppe der Vinylester von unverzweigten oder verzweigten Carbonsäuren mit 1 bis 9 C-Atomen, deren Homopolymerisate eine Glasübergangstemperatur Tg > 0°C aufweisen,
c) 5 bis 70 Gew.-% eines oder mehrerer Vinylester aus der Gruppe der Vinylester von verzweigten Carbonsäuren mit 8 bis 13 C-Atomen, deren Homopolymerisate eine Glasübergangstemperatur Tg < 0°C aufweisen,
d) 0.5 bis 10 Gew.-% eine oder mehrere ethylenisch ungesättigte Mono- oder Dicarbonsäuren mit 3 bis 4 C-Atomen,
e) 0 bis 10 Gew.-% ein oder mehrere ethylenisch ungesättigte, hydroxyalkylfunktionelle Comonomere,
f) 0 bis 10 Gew.-% weitere einfach oder mehrfach ethylenisch ungesättigte Comonomere, wobei die Angaben in Gew.-% jeweils auf das Gesamtgewicht der Comonomere bezogen sind und sich auf 100 Gew.-% aufaddieren, und die damit erhaltene Dispersion gegebenenfalls getrocknet wird.

2. Verwendung nach Anspruch 1, **dadurch gekennzeichnet, daß** als Vinylester b) ein oder mehrere aus der Gruppe umfassend Vinylacetat, Vinylpropionat, Vinylbutyrat, 1-Methylvinylacetat, Vinylpivalat und Vinylester von α-verzweigten Monocarbonsäuren mit 9 C-Atomen copolymerisiert werden.

3. Verwendung nach Anspruch 1 oder 2, **dadurch gekennzeichnet, daß** als Vinylester c) ein oder mehrere aus der Gruppe umfassend Vinyl-2-Ethylhexanoat, Vinyllaurat, Vinylester von α-verzweigten Monocarbonsäuren mit 10 oder 11 C-Atomen und Vinylester von verzweigten Monocarbonsäuren mit 10 bis 13 C-Atomen copolymerisiert werden.

4. Verwendung nach Anspruch 1 bis 3, **dadurch gekennzeichnet, daß** als Comonomer d) ein oder mehrere aus der Gruppe umfassend Acrylsäure, Methacrylsäure, Itaconsäure, Fumarsäure und Maleinsäure copolymerisiert werden.

5. Verwendung nach Anspruch 1 bis 4, **dadurch gekennzeichnet, daß** als Comonomer e) ein oder mehrere aus der Gruppe umfassend Methacrylsäure- und Acrylsäurehydroxyalkylester mit C₁- bis C₅-Alkylrest copolymerisiert werden

6. Verwendung nach Anspruch 1 bis 5, **dadurch gekennzeichnet, daß** als Comonomer f) ein oder mehrere aus der Gruppe umfassend ethylenisch ungesättigte Carbonsäureamide, ethylenisch ungesättigte Sulfonsäuren und deren Salze sowie Vinylpyrrolidon copolymerisiert werden.

7. Verwendung nach Anspruch 1, **dadurch gekennzeichnet, daß** als Vinylacetat-Ethylen-Mischpolymerisat ein Copolymer aus a) 10 bis 40 Gew.-% Ethylen, b) 35 bis 70 Gew.-% Vinylacetat, c) 10 bis 45 Gew.-% Vinylester von α-verzweigten Monocarbonsäuren mit 10 oder 11 C-Atomen d) 2 bis 6 Gew.-% Acrylsäure und/oder Methacrylsäure, e) 0 bis 5 Gew.-% Hydroxyethylacrylat und f) 0 bis 2 Gew.-% Acrylamid enthalten ist.

8. Verwendung nach Anspruch 1 bis 7, **dadurch gekennzeichnet, daß** die Klebemittel als Haftkleber und als Bodenwand-, Wand- und Deckenklebstoff verwendet werden.

9. Verwendung nach Anspruch 1 bis 7, **dadurch gekennzeichnet, daß** die Klebemittel als emissionsarme Fußbodenkleber verwendet werden.

## Claims

1. Use of aqueous, protective-colloid-free polymer dispersions or water-redispersible dispersion powders, obtainable therefrom, of vinyl ester-ethylene copolymers as low-emission adhesives, **characterized in that** they are obtained by free-radically initiated emulsion polymerization, in aqueous medium and in the presence of one or more emulsifiers, of a comonomer mixture comprising
a) from 5 to 50% by weight of ethylene,
b) from 20 to 80% by weight of one or more vinyl esters from the group of vinyl esters of unbranched or branched carboxylic acids having 1 to 9 carbon atoms whose homopolymers have a glass transition temperature Tg > 0°C,
c) from 5 to 70% by weight of one or more vinyl esters from the group of vinyl esters of branched carboxylic acids having 8 to 13 carbon atoms whose homopolymers have a glass transition temperature Tg < 0°C,
d) from 0.5 to 10% by weight of one or more ethylenically unsaturated monocarboxylic or dicarboxylic acids having 3 or 4 carbon atoms,
e) from 0 to 10% by weight of one or more ethylenically unsaturated, hydroxyalkyl-functional comonomers,
f) from 0 to 10% by weight of further, mono- or polyethylenically unsaturated comonomers,
the % by weight being based in each case on the overall weight of the comonomers and adding up to 100% by weight, and the dispersion obtained therewith being dried if desired.

2. Use according to Claim 1, **characterized in that** vinyl esters b) copolymerized are one or more from the group consisting of vinyl acetate, vinyl propionate, vinyl butyrate, 1-methylvinyl acetate, vinyl pivalate, and vinyl esters of α-branched monocarboxylic acids having 9 carbon atoms.

3. Use according to Claim 1 or 2, **characterized in that** vinyl esters c) copolymerized are one or more from the group consisting of vinyl 2-ethylhexanoate, vinyl laurate, vinyl esters of α-branched monocarboxylic acids having 10 or 11 carbon atoms, and vinyl esters of branched monocarboxylic acids having 10 to 13 carbon atoms.

4. Use according to any of Claims 1 to 3, **characterized in that** copolymerized comonomer d) comprises one or more from the group consisting of acrylic acid, methacrylic acid, itaconic acid, fumaric acid, and maleic acid.

5. Use according to any of Claims 1 to 4, **characterized in that** copolymerized comonomer e) comprises one or more from the group consisting of methacrylic and acrylic hydroxyalkyl esters having a C₁ to C₅ alkyl radical.

6. Use according to any of Claims 1 to 5, **characterized in that** copolymerized comonomer f) comprises one or more from the group consisting of ethylenically unsaturated carboxamides, ethylenically unsaturated sulphonic acids and their salts, and vinylpyrrolidone.

7. Use according to Claim 1, **characterized in that** said vinyl acetate-ethylene copolymer is a copolymer of a) from 10 to 40% by weight of ethylene, b) from 35 to 70% by weight of vinyl acetate, c) from 10 to 45% by weight of vinyl esters of α-branched monocarboxylic acids having 10 or 11 carbon atoms, d) from 2 to 6% by weight of acrylic acid and/or methacrylic acid, e) from 0 to 5% by weight of hydroxyethyl acrylate, and f) from 0 to 2% by weight of acrylamide.

8. Use according to any of Claims 1 to 7, **characterized in that** the adhesive is used as a pressure-sensitive adhesive or as a flooring, wall or ceiling adhesive.

9. Use according to any of Claims 1 to 7, **characterized in that** the adhesive is used as a low-emission flooring adhesive.

## Revendications

1. Utilisation de dispersions polymères aqueuses, exemptes de colloïdes de protection ou de poudres de dispersion de polymères mixtes ester vinylique
- éthylène, capables de redispersion dans l'eau, que l'on peut obtenir à partir de ces dernières, en tant qu'adhésifs pauvres en émission, **caractérisée en ce que** celles-ci sont obtenues par une polymérisation en émulsion, initiée par voie radicalaire, en milieu aqueux et en présence d'un ou de plusieurs émulsifiants, d'un mélange de comonomères faits à partir
de 5 à 50 % en poids d'éthylène,
de 20 à 80 % en poids d'un ou de plusieurs esters vinyliques provenant du groupe des esters vinyliques d'acides carboxyliques non ramifiés ou ramifiés ayant de 1 à 9 atomes de C, dont les homopolymères présentent une température de transition vitreuse Tg > 0°C,
de 5 à 70 % en poids d'un ou de plusieurs esters vinyliques provenant du groupe des esters vinyliques d'acides carboxyliques ramifiés, ayant de 8 à 13 atomes de C, dont les homopolymères présentent une température de transition vitreuse Tg < 0°C,
de 0,5 à 10 % en poids d'un ou de plusieurs acides monocarboxyliques ou dicarboxyliques à insaturation éthylénique, ayant de 3 à 4 atomes de C,
de 0 à 10 % en poids d'un ou de plusieurs comonomères à fonction hydroxyalkyle à insaturation éthylénique,
de 0 à 10 % en poids de comonomères insaturés supplémentaires, à insaturation éthylénique simple ou multiple, les indications en % en poids se rapportant à chaque fois au poids total des comonomères et se cumulant à la valeur de 100 % en poids, et les dispersions ainsi obtenues étant, le cas échéant, séchées.

2. Utilisation selon la revendication 1, **caractérisée en ce que** l'on procède, en tant qu'ester vinylique b), à la copolymérisation d'un ou de plusieurs des composés provenant du groupe comprenant l'acétate de vinyle, le propionate de vinyle, le butyrate de vinyle, l'acétate de 1-méthylvinyle, le pivalate de vinyle et des esters vinyliques d'acides monocarboxyliques ramifiés en position a, ayant 9 atomes de C.

3. Utilisation selon la revendication 1 ou 2, **caractérisée en ce que** l'on procède, en tant qu'ester vinylique c), à la copolymérisation d'un ou de plusieurs composés provenant du groupe comprenant le 2-éthylhexanoate de vinyle, le laurate de vinyle, des esters vinyliques d'acides monocarboxyliques ramifiés en position α, ayant 10 ou 11 atomes de C et d'esters vinyliques d'acides monocarboxyliques ramifiés, ayant de 10 à 13 atomes de C.

4. Utilisation selon la revendication 1 à 3, **caractérisée en ce que** l'on procède, en tant que comonomère d), à la copolymérisation d'un ou de plusieurs composés provenant du groupe comprenant l'acide acrylique, l'acide méthacrylique, l'acide itaconique, l'acide fumarique et l'acide maléique.

5. Utilisation selon la revendication 1 à 4, **caractérisée en ce que** l'on procède, en tant que comonomère e), à la copolymérisation d'un ou de plusieurs composés provenant du groupe comprenant des esters hydroxyalkyles de l'acide méthacrylique et de l'acide acrylique, avec un radical alkyle C₁ à C₅.

6. Utilisation selon la revendication 1 à 5, **caractérisée en ce que** l'on procède, en tant que comonomère f), à la copolymérisation d'un ou de plusieurs composés provenant du groupe comprenant des amides d'acides carboxyliques à insaturation éthylénique, des acides sulfoniques à insaturation éthylénique et leurs sels ainsi que la vinylpyrrolidone.

7. Utilisation selon la revendication 1, **caractérisée en ce que**, en tant que polymère mixte acétate de vinyle-éthylène, un copolymère fait a) de 10 à 40 % en poids d'éthylène, b) de 35 à 70 % en poids d'acétate de vinyle, c) de 10 à 45 % en poids d'esters vinyliques d'acides monocarboxyliques ramifiés en position α ayant 10 ou 11 atomes de C, d) de 2 à 6 % en poids d'acide acrylique et/ou d'acide méthacrylique, e) de 0 à 5 % en poids d'acrylate d'hydroxyéthyle et f) de 0 à 2 % en poids d'acrylamide, y est contenu.

8. Utilisation selon la revendication 1 à 7, **caractérisée en ce que** l'on utilise les adhésifs en tant qu'adhésifs sensibles à la pression et en tant qu'adhésifs de sols, de parois et de plafonds.

9. Utilisation selon la revendication 1 à 7, **caractérisée en ce que** l'on utilise les adhésifs en tant qu'adhésifs de planchers, pauvres en émission.
